# EUROPEAN PATENT SPECIFICATION

(11) **EP 1 670 303 B1**
(45) Date of publication and mention of the grant of the patent: **25.06.2008**
(21) Application number: 04737699.1
(22) Date of filing: 28.06.2004
(51) Int. Cl.: A01C 5/06, A01C 7/08

(54) **MOVABLE CHASSIS SYSTEM FOR MOVING PLANTER-LINES IN PLANTER-FERTILIZERS AND AGRICULTURAL MACHINERY IN GENERAL**
BEWEGLICHES RAHMENSYSTEM ZUM BEWEGEN VON PFLANZMASCHINEN-REIHEN IN PFLANZ-/DÜNGE-MASCHINEN UND LANDMASCHINEN IM ALLGEMEINEN
SYSTEME DE CHASSIS MOBILE PERMETTANT DE DEPLACER DES LIGNES DE PLANTS DANS LES FERTILISEURS DE PLANTS ET LES MACHINES AGRICOLES EN GENERAL

(30) Priority: 03.09.2003 BR 0303032
(43) Date of publication of application: 21.06.2006
(73) Proprietor: Semeato S/A Industria e Comercio, Passo Fundo-RS, CEP-99.060-000 (BR)
(72) Inventor: ROSSATO, Roberto, Otaviano, Passo Fundo-RS, CEP-99-010-600 (BR); BUZINI, Sérgio, Angelo, Passo Fundo-RS, CEP-99.000-000 (BR); KROTH, Rogerio, Luiz, Passo Fundo-RS, CEP-99.000-000 (BR)
(74) Representative: Siniscalco, Fabio
(86) International application number: PCT/BR2004/000105
(87) International publication number: WO 2005/020661

(56) References cited:
- US-A- 3 946 681
- US-A- 4 953 482

## Description

### TECHNICAL FIELD OF THE INVENTION

This invention patent description is for a revolutionary system of a floating chassis for moving the planting lines in planter-fertilizers, and agricultural machinery in general. It has a system of holding tanks for the product to supply the distributor elements, which are fixed independently of the structure of these tanks.

### STATE OF THE ART

We are familiar with machines made up of a chassis (in a single block) that as well as holding the reservoir for the product, also holds the planting lines in place (seed and fertilizer). These machines are commonly called multiple planters, as they can plant any kind of seed in any kind of situation.

Some important points about multiple planters and what they should contain:
- A single reservoir/tank for the planting lines (seed and fertilizer);
- A structure that allows fixing the lines for winter crops (wheat, oats, barley etc) and summer crops (soybeans, corn, sorghum etc.);
- A specific transmission system for summer crops with axles, chains, feeders, etc;
- Soil tillers adaptable to different soils and crops;
- A system for regulating the planting depth, and a compactor to prevent air pockets.

These machines are used for both summer crops (large seed) and winter crops (small seed). However, the main criticism of this equipment is regarding the variety and complexity of the parts and components involved in changing from one crop to another, and the number of tools and steps required.

In order to change from summer to winter planting for example, the following procedures are necessary:
- Remove the transmission, involving chains, axles, bushings etc;
- Remove planter lines fixed to the planter-fertilizer chassis;
- Leave the chassis bar totally free for placing new planter units;
- Replace planter lines on the chassis bar according to the number of furrows and spacing for the crop;
- Tighten up all the planter lines so they do not move during planting;
- Check the spacing of the lines (seed and fertilizer), according to the crop;
- Check the alignment of the chains, gears, sprockets of the distribution mechanism for the product, among other things.
   As we can see, the operation of changing from one crop to another is not as simple as it seems, since any detail left unchecked can risk compromising the entire planting operation. Thus, the labor involved in this task represents a high production cost involving immeasurable losses. Also, there is a high physical risk, as the operation of changing the equipment from one crop to another in the steps described above is carried out on the planter itself, that is, in restricted spaces, with difficult access for adjustments, lubricating and maintenance. Therefore, there is a need for planter-fertilizers to be able to quickly changeover from one crop (summer, large grain) to another (winter, small grain).
   From this, it can be said that the equipment currently on the market
- Uses too much labor,
- Presents high physical risks;
- Relies on an enormous number of components for changing the machine over,
- The changeover itself is too complex;
- Too much time is taken on cleaning, maintenance, lubrication and adjustments on the planter/fertilizer machines.

Document US-3,946,681 discloses an earth working apparatus for use in agricultural pre-planting operations includes a first frame having laterally spaced ground engaging wheels and a second frame having a leading edge thereof pivotally mounted on the first frame adjacent a leading edge and movable between a storage position and a working position.

In this sense, we can see the need to create a planter/fertilizer system that can be quickly changed over for summer or winter usage, using special chassis connectors that that guarantee fast, safe, efficient assembly, uniting versatility with decreased struggle in changing planting modules.

Therefore, we need to create a system with a movable chassis for rapid, precise for summer or winter seeds and fertilizer line changes. A system that does not require intensive labor and would present a new technicai-constructive effect different from the existing one, as it would involve a new concept whereby a single structure holds the reservoir for the product and the respective feeders, and another that has the implements for attacking the soil, as planting modules.

### INVENTION SUMMARY

As shown, we aim not only to offer a more practical and utilitarian method of changing over a planter from large to small seed, but also a new planter/fertilizer concept A planter/fertilizer based on the principle of using a common structure for any kind of crop to hold independent modules allowing work with any kind of soil, as each module will have its own planting specialty.

For this purpose, the present invention will have a space for fixing the planting lines and another for supporting the tanks with the product. As such, the main feature of the system is the movable chassis that holds the planter-lines for placing the seed and the fertilizer, as this chassis defines the line movement to carry out the transport or planting. Therefore, we have a planter divided into two chassis: one fixed, which is directly connected to the wheel and supports the product reservoirs/tanks and another that is floating/movable; connected to the fixed one through a system that carries out the up or down movement of this chassis, with functional independence between the fixed and the movable, each one having a specific function that does not interfere with the sphere of the other. This system allows saving time for adjusting the planting lines and for maintenance, as well as changing from winter to summer crops and vice-versa, since it has an attachment system on the movable chassis for quick changeovers. In addition, it can be used for other purposes, such as spreading fertilizer, since removal of the planter lines frees the machine to be used to spread fertilizer, since its structure allows this possibility.

### DESCRIPTION OF FIGURES

This application is submitted with drawings representing the movable chassis system for moving the planting lines, so that a specialized technician can easily put it into operation.

These drawings, which express the best method of carrying out this idea, are numbered consecutively and illustrate the descriptive text for better understanding.

We point out that the figures shown are mere illustrations, and there may be variations as long as they do not diverge from what was initially proposed. Therefore we have:
**FIGURE 1** shows a lateral view of a multiple planter-fertilizer with the conventional system for line attachment;
**FIGURES 2, 2****.****1****,** **2.2****, AND 2.3** illustrate, from a lateral view, a planter-fertilizer with the object in question;
**FIGURES 3** **AND 3.1** show a lateral view of a planter-fertilizer with the system under consideration in operation of work and transport;
**FIGURES 4** **AND 4.1** show a common structure, but with working tools distinct from the preferred conception;
**FIGURE 5** illustrates the possibility of building a planter with the movable chassis in question.

### DETAILED DESCRIPTION AND PREFERRED MANNER OF CONSTRUCTION OF THIS INVENTION

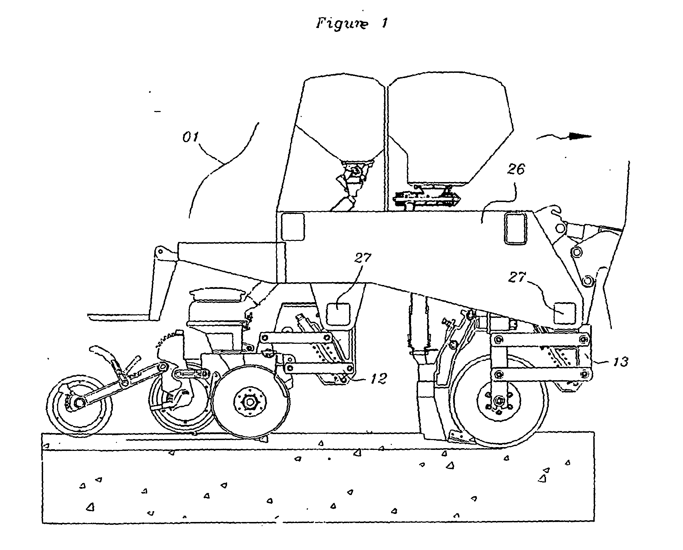

Figure 1 shows the lateral view of a 01 multiple planter-fertilizer, that is, one that does both summer and winter planting, in which the form of the state of the art can be seen, as it presents a chassis in one block that also serves as support for the reservoir/tank for the product and for lines for laying the seed 12 and the fertilizer 13. We can see that point 27 for setting planting lines 12 and 13 are located on the same body of chassis 26, from which we can deduce that it is necessary to get under the machine to loosen the lines for laying the seed and fertilizer, to remove and/or arrange a new spacing, as well as other jobs needed to put the machine into operation. All these operations require a certain amount of time and entail physical risks, as the location is difficult to access to make the change and perform maintenance on the components.

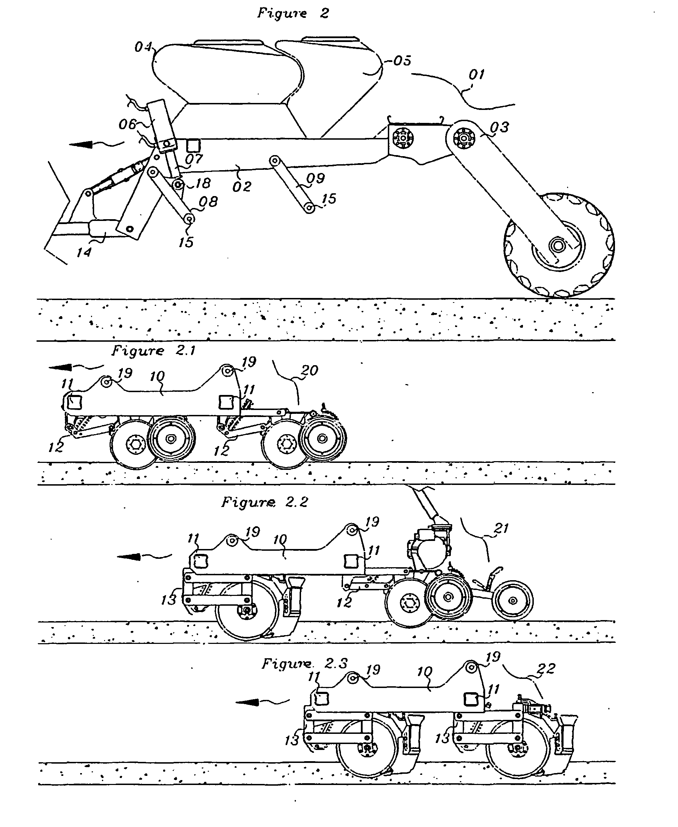

Figure 2 shows a lateral view of the planter-fertilizer 01 that indicates the preferred method of the present invention, as it shows the fixed chassis 02 to the runner wheel 03 and the yoke 14, act as product reservoir supports (seed 04 and fertilizer 05). It also supports the hydraulic cylinder 06 with its shaft 07 that is attached to the couple 18 located on the larger expanding bar 08, also responsible for housing the coupling point 15 attaching the fixed chassis 02 to the movable chassis 10.

This conception precludes the removal of each planting line, as well as the expense in time for changing the planting units, as it has a special, movable chassis 10 for each type of crop. That is, in preparing the planter for winter planting 20 (Fig. 2.1), such as wheat or oats, the chassis points 19 are coupled to points 15 of the fixed chassis 02, and in this way, the machine is ready for planting. This is in contrast to conventional machines, as shown in figure 1, where in mounting the planter lines, each line must be removed from attachment points 27 one by one. Therefore, with this invention, which for each crop (soybeans, corn, wheat, renewing pasture etc...) there will be an appropriate movable chassis 10, that is, mounted for a given application of product, dosage etc... So that for each crop chosen, the respective movable chassis 10 (or planting module) should be attached to arms 8 and 9 (by the attachment points 15) on the fixed chassis 02.

To better clarify what this invention proposes, three models of movable chassis 10 are shown. One is a model to be used in winter planting 20 (Fig. 2.1); one for summer planting 21 (Fig. 2.2) and one for renewing pasture 22 (Fig. 2.3), in which the construction of the planting modules are shown (configuration of each movable chassis 10), changeable according to the type of planting to be done, so that for changing each module, one module is simply removed and another put in its place. This can be done simply and quickly. The hydraulic cylinder is lowered until the planter-lines 12 and 13 that are fixed on tube 11 rest on the ground. Points 19 of the movable chassis 10 can be uncoupled in relation to points 15.

When the machine is in operation, the module being utilized can be maneuvered up or down for greater or lesser tilling by the planting-lines. Thus, this invention allows regulation of tilling and product dispersal and avoids pauses or even stops to adjust the cutting devices.

A more accurate, clearer view can be seen in figure 2.1 of a coupling module (or movable chassis 10) for winter planting 20, where we can see the planter lines 12 fixed to the respective tubes 11 of the movable chassis 10, which support them. The coupling points 19 of the movable chassis 10 can be clearly seen, which serve to couple module 20 to the fixed chassis 02 with two extendible bars, the larger 08 and the lesser 09. Figure 2.2 shows a lateral view of movable chassis 10, mounted on a fast coupling module 21 (prepared for summer planting), where the line for laying the fertilizer 13 and the seed 12 can be seen, attached to the tube 11 by means of clamps (not shown), and module 21 referred to is coupled to the fixed chassis 02 by the same means shown in Figure 2.1. In Figure 2.3, we have another fast-coupling module 22 for use in a situation of diverse planting. This module has soil working tools different from those mentioned, as the lines are set up for renovation of pastures. Thus, the inventive concept of the model proposed can be seen, which allows the main chassis (fixed 02) and several modules (movable chassis 10) to be coupled simply quickly and efficiently.

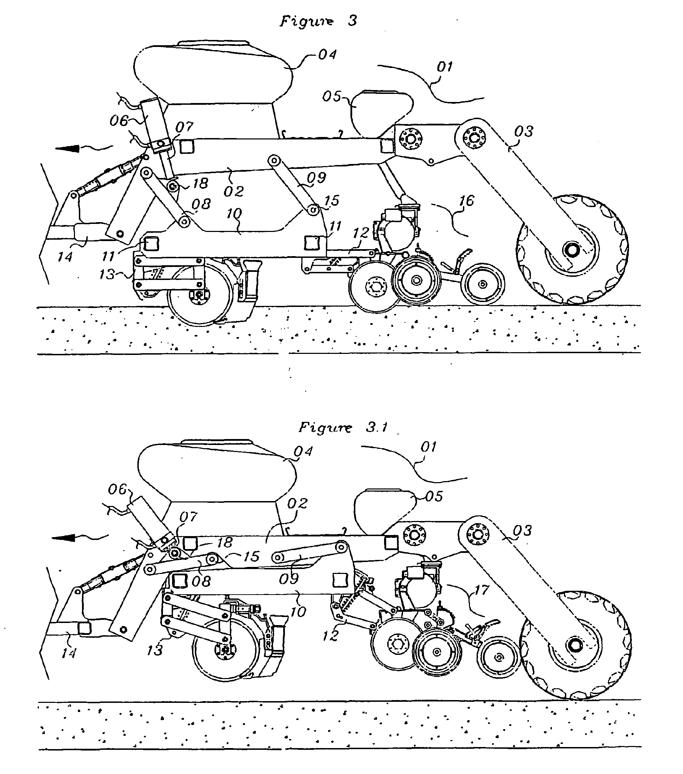

Figure 3 shows a planter fertilizer 01 in operation 16, where the fixed chassis can be seen 02 that is linked to the wheel 03 and the yoke 14, and provides support for the product reservoirs (seed 05 and fertilizer 04) and for the hydraulic cylinder 06 that is attached to the larger expanding bar 08 by means of a bar 07 that is fixed to its coupling point. The larger expanding bar is attached to the movable chassis 10, with a tube 11 that supports the planting lines for seed 12 or for fertilizer 13, that is also attached to the smaller expanding bar 09, which is fixed to the fixed chassis 02 and coupled to the movable chassis 10. Figure 3.1 shows the same planter-fertilizer 01 shown in figure 3, but used in transport. It can be seen that the wheel of machine 03 undergoes no action from the hydraulic cylinder for raising the movable chassis 10, as it acts independently of it.

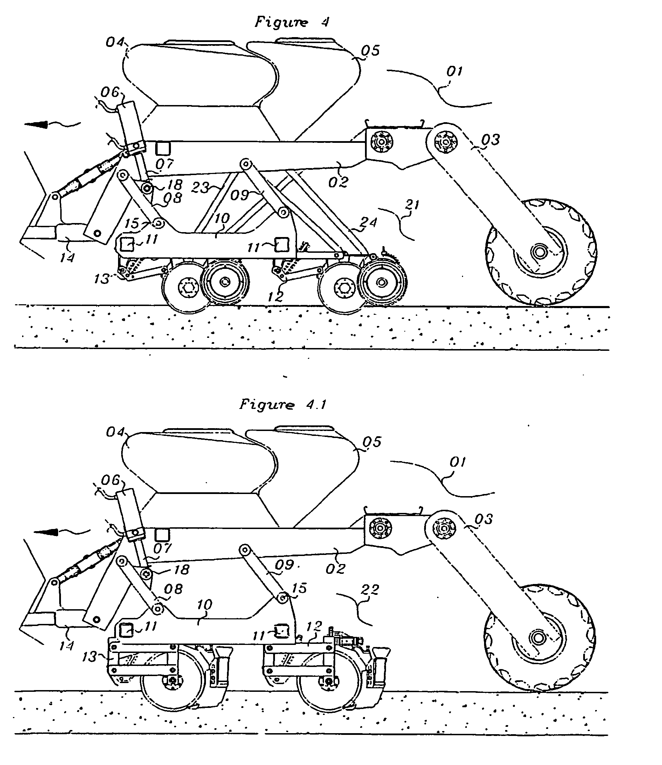

Figure 4 shows a planter-fertilizer 01 set up for winter planting 21, which can be seen by the movable chassis 10 supporting the planting lines 12. Note the position of the product ducts, for seed 24 and/or fertilizer 23 over the planter-lines. It can also be seen that the movable chassis 10 serves as support for the planting-lines 12 that are duly fixed in tube 11, while the movable chassis referred to 10 is duly fixed to the extendable bars 08 and 09 that execute the up or down movement of the entire block of planting lines, for quick and efficient action. In Figure 4.1, there is a lateral view of a planter-fertilizer 01 with reservoirs for the products 04 and 05, where a fixed chassis can be seen 02 attached to a set of planter-lines represented in this case 22 by pasture planters.

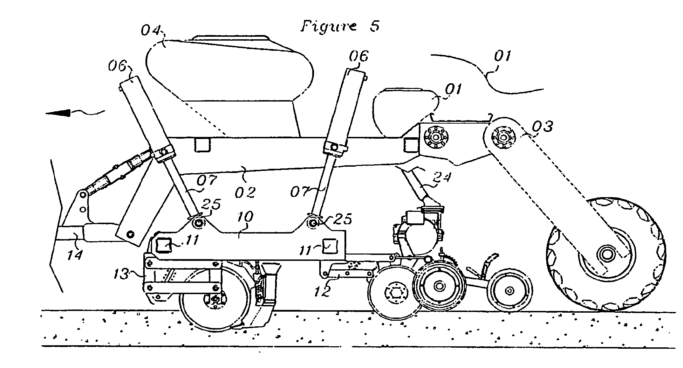

Figure 5 shows a lateral view of a planter-fertilizer 01 that shows a constructive possibility of a system of movement for the movable chassis 10 in relation to the fixed chassis 02, that shows the shaft 07 from the hydraulic cylinder 06, connected directly 25 to the movable chassis 10, that is supporting tubes 11 which give support to the planter-lines, whether for seed 12 or fertilizer 13.

## Claims

1. Movable chassis system (01) for moving planting lines in planters, fertilizers and agricultural machinery in general,
the system comprising:
- a first chassis (02) holding tanks/reservoirs (04, 05) for containing products;
- at least a runner wheel (03), said first chassis (02) being fixed and coupled directly to the wheel (03);
- a second chassis (10) floating or movable attached to the first chassis (02) so as to allow raising and lowering of the second chassis (10);
- distributor elements near the soil for distributing the products, the distributor elements being arranged on the second chassis (10) and are attached on a separate structure from the tanks/reservoirs (04,05):
- planting lines (12, 13) arranged on the second chassis (10), the second chassis (10) defining movement of the planting lines (02, 03) for transporting or planting;
- a yoke (14) coupled to the first chassis (02), the first chassis (02) being linked to the wheel (03) and the yoke (04);
- an hydraulic, cylinder (06) associated to the first chassis (02);
**characterised by** comprising
- a larger extendable bar (08) having a first end attached to the first chassis (02) and a second end attached to the second chassis (10), the hydraulic cylinder (06) having a shaft (07) that is attached by a coupling point (18) that is situated on the larger extensible bar (08);
- a lesser extendible bar (09) having a first end attached to the first chassis (02) and a second end (15) responsible for housing coupling point (15) that attaches the first chassis (02) to the second chassis (10), the larger (08) and lesser (09) extensible bars allowing functional independence between the first (02) and second (10) chassis, so that each does a specific task and does not interfere with the other.

## Patentansprüche

1. Bewegliches Rahmensystem (01) zum Bewegen von Pflanzreihen in Pflanzmaschinen, Düngemaschinen und Landmaschinen im allgemeinen, wobei das System enthält:
- einen ersten Rahmen (02), der Tanks/Behälter (04, 05) zur Aufnahme von Erzeugnissen hält;
- wenigstens ein Laufrad (03), wobei der erste Rahmen (02) an dem Rad (03) befestigt und direkt mit diesem gekoppelt ist;
- einen zweiten Rahmen (10), der am ersten Rahmen (02) beweglich angebracht ist oder an diesem gleitet, um so ein Anheben und Absenken des zweiten Rahmens (10) zu gestatten;
- Verteilerelemente in der Nähe des Bodens, um die Erzeugnisse zu verteilen, wobei die Verteilerelemente am zweiten Rahmen (10) angeordnet sind und an einem getrennten Aufbau von den Tanks/Behältern (04, 05) angebracht sind;
- Pflanzreihen (12, 13), die am zweiten Rahmen (10) angeordnet sind, wobei der zweite Rahmen (10) eine Bewegung der Pflanzreihen (02, 03) zum Transportieren oder Pflanzen definiert;
- eine Gabel (14), die mit dem ersten Rahmen (02) verbunden ist, wobei der erste Rahmen (02) mit dem Rad (03) und der Gabel (04) verbunden ist;
- einen Hydraulikzylinder (06), der dem ersten Rahmen (02) zugeordnet ist;
**dadurch gekennzeichnet, dass** es enthält
- einen größeren ausfahrbaren Träger (08), dessen erstes Ende am ersten Rahmen (02) angebracht ist und dessen zweites Ende am zweiten Rahmen (10) angebracht ist, wobei der Hydraulikzylinder (06) über einen Stempel (07) verfügt, der durch einen Kopplungspunkt (18) angebracht ist, der sich am größeren ausfahrbaren Träger (08) befindet;
- einen kleineren ausfahrbaren Träger (09), dessen erstes Ende am ersten Rahmen (02) angebracht ist und dessen zweites Ende (15) einen Kopplungspunkt (15) aufweist, der den ersten Rahmen (02) am zweiten Rahmen (10) anbringt, wobei der größere (08) und der kleinere (09) ausfahrbare Träger eine funktionelle Unabhängigkeit zwischen dem ersten (02) und dem zweiten (10) Rahmen zulassen, so dass jeder eine bestimmte Aufgabe ausführt und den anderen nicht stört.

## Revendications

1. Système de châssis mobile (01) pour déplacer des lignes de plantation dans des planteurs, des fertiliseurs et des machines agricoles en général,
lé système comprenant:
- un premier châssis (02) contenant des cuves/réservoirs (04, 05) pour contenir des produits ;
- au moins une roue de turbine (03), ledit premier châssis (02) étant fixé et couplé directement à la roue (03) ;
- un second châssis (10) flottant ou fixé de manière mobile au premier châssis (02) afin de permettre le levage et l'abaissement du second châssis (10) ;
- des éléments de distributeur à proximité du sol pour distribuer les produits, les éléments de distributeur étant agencés sur le second châssis (10) et sont fixés sur une structure séparée des cuves/réservoirs (04, 05) ;
- des lignes de plantation (12, 13) agencées sur le second châssis (10), le second châssis (10) définissant le mouvement des lignes de plantation (02, 03) pour le transport ou la plantation ;
- une fourche (14) couplée au premier châssis (02), le premier châssis (02) étant relié à la roue (03) et à la fourche (04) ;
- un vérin hydraulique (06) associé au premier châssis (02) ;
**caractérisé en ce qu'**il comprend :
- une plus grande barre extensible (08) ayant une première extrémité fixée au premier châssis (02) et une seconde extrémité fixée au second châssis (10), le vérin hydraulique (06) ayant un arbre (07) qui est fixé par un point de couplage (18) qui est situé sur la plus grande barre extensible (08) ;
- une plus petite barre extensible (09) ayant une première extrémité fixée au premier châssis (02) et une seconde extrémité (15) sensible pour loger le point de couplage (15) qui fixe le premier châssis (02) au second châssis (10), la plus grande barre extensible (08) et la plus petite barre extensible (09) permettant une indépendance fonctionnelle entre le premier (02) et le second (10) châssis, de sorte que chacun réalise une tâche spécifique et n'interfère pas avec l'autre.
